# EUROPEAN PATENT APPLICATION

(11) **EP 4 718 025 A1**
(43) Date of publication of application: **01.04.2026**
(21) Application number: 25202202.5
(22) Date of filing: 15.09.2025
(51) Int. Cl.: G01B 21/04, B25J 9/16, G06T 7/507, G06T 7/80, H04N 7/18, H04N 23/66

(54) **THREE-DIMENSIONAL TARGET FOR THE VISUAL EXAMINATION CHARACTERIZATION AND RELATIVE SYSTEM**

(30) Priority: 30.09.2024 IT 202400021555
(71) Applicant: Istituto Nazionale per l'Assicurazione contro gli Infortuni sul lavoro - INAIL, 00144 Roma (IT)
(72) Inventor: ARTENIO, Emanuele, 00144 Roma (RM) (IT); AUGUGLIARO, Giuseppe, 00144 Roma (RM) (IT); BALISTRERI, Riccardo, 00144 Roma (RM) (IT); GATTAMELATA, Davide, 00144 Roma (RM) (IT); GIACOBBE, Francesco, 00144 Roma (RM) (IT); LEDDA, Alessandro, 00144 Roma (RM) (IT); SPANU, Omero, 00144 Roma (RM) (IT)
(74) Representative: Fiammenghi, Eva

(57) **Abstract**

According to the present invention, a three-dimensional resolution target is attained together with a relative system for the characterization of the surface defects/indications via indirect visual examinations of various surfaces. The object of such target is to compare and evaluate the resolution of the image acquired from an image acquisition unit.

The target comprises incisions and/or projections organized in groups on a surface with three-dimensional geometric shapes that protrude from said surface and/or are embedded in said surface.

The system of the present invention is employed for the visual examination characterization and exploits said three-dimensional target. **In** its basic form, the system comprises an image acquisition unit and at least a memory into which the acquired images are sent and preserved. Other embodiments provide for the use of drones that mount said acquisition unit and which can physically position the target on the surface to be examined.

## Description

### Field of the art

The invention refers to the field of technologies applicable to the non-destructive control method by means of visual examination. Still more specifically, the invention is aimed to provide a three-dimensional target for determining the resolution of a visual acquisition apparatus and the relative use system.

### Prior art

Optical resolution targets are used for testing the resolutive power of various optical devices, such as microscopes, cameras, image scanners and the like. Well-known and diffused are two-dimensional optical resolution targets such as those used by the US Air Force (USAF). These targets are usually mainly plastic or metal devices on which a sequence of shapes, numbers and/or letters have been molded which have very precise dimensions and which therefore allow knowing the level of definition (resolution) of an optical device that is framing them. The sequence of USAF shapes, letters and numbers is often also molded on large flat surfaces such to allow an evaluation of the optical resolution of the satellite image acquisition devices. In the context of image diagnostics (visual examinations), said targets can be employed in order to know the resolution (and hence the acquired level of detail) of a video camera employed for a visual inspection (visual examination) of any one mechanical apparatus. Nevertheless, since said targets are exclusively two-dimensional, it is impossible to know the resolution of the video camera in relation to a "third dimension" perpendicular to a generic two-dimensional target.

The patents involved with providing three-dimensional resolution targets are very few in number. Indeed it is known practice to use suitable three-dimensional targets for the calibration, for example, of three-dimensional acquisition systems such as stereoscopic video cameras and/or "points clouds" acquisition systems. One example of a patent that provides a three-dimensional target is the utility model CN212624150U by CHEN TAO et al. The utility model describes a calibration target of an optical imaging system. The body of the calibration target comprises a plurality of calibration tables which are stacked in sequence in a thickness direction. The calibration target is a three-dimensional calibration target and can simultaneously calibrate a plurality of indices of an optical imaging system. The "calibration tables" elements are stacked on top of each other.

Another example is the object of the utility model CN208313322U by ZOU JIAN et al. The finding describes a three-dimensional calibration target with at least four demarcation marks, a housing and non-coplanar surfaces. This three-dimensional calibration target has surfaces that are radially arranged with respect to the center such to allow the viewing of the target from any measurement angle. The demarcation marks on a flat face are then compared with demarcation marks of a flat target.

The inventions reported up to now as mere non-limiting examples are representative of the invention-technology situation of the present day.

The abovementioned inventions resolve technical problems tied to calibration targets in order to allow the viewing thereof from various viewpoints and in order to measure and view different shapes so to achieve a suitable calibration. The calibration that the known systems operate is such to allow calibrating a three-dimensional optical acquisition system, such as systems that acquire points clouds in space etc. None of the abovementioned inventions, nor those present in the state of the art, deal with using three-dimensional targets for operating a determination of the level of resolution of an optical acquisition system. Up to now, however, in the field of image diagnostic and acquisition systems, there is the need to have a target capable of determining the resolution of the acquired images (previously or in real time) not only relative to a plane, but also relative to the thickness and to a depth direction. Indeed, in image diagnostics, acquisition systems are increasingly used that are remote-controlled, so to be able to acquire images of structural, mechanical and/or other remote components whose direct visual inspection is difficult if not impossible, as in the cases of very narrow ducts and/or particularly tall structures. In these cases, the remote inspection is the most economically advantageous choice, and is also the best with regard to the quality of the data that can be stored and preserved in suitable databases. However, it is known that, in order for example to determine the extent of damage (e.g. generated by rust, impact, deformations and other items), even if of small extension, it is necessary to evaluate the "depth" thereof or rather the extension in a direction that tends to exit from the surface plane of the structure or of the component under inspection. In these cases, the direction of the light is also essential, as this could "falsify" an acquired image, making a surface defect appear more or less deep than it actually is.

The object of the present invention is to provide a device (three-dimensional target) and a relative system that is able to resolve the abovementioned problems, allowing an effective evaluation of the resolution of the optical acquisition systems in all directions.

The advantages offered by the present invention will be clearer in light of the following detailed descriptions.

### Description of the invention

According to the present invention, a three-dimensional resolution target is attained together with a relative system for the characterization of the surface defects/indications to be used in the non-destructive control method of the indirect visual examination for checking various surfaces such as for example those of pressurized tools or of metal surface or non-metal surface in general. The use can also be extended to scans attained by means of laser scanner.

Such target has the object of comparing and evaluating the quality level of the image acquired from an image acquisition unit in terms of linear resolution intended as the minimum distance between two objects such that the image acquisition unit and the relative algorithms can distinguish them, allowing the definition of the smallest indication group that is detected in the reading of the image.

The target is the comparison device that allows characterizing the image produced by means of acquisition unit which acquire, transmit and allow reproducing the image on suitable screens, preferably high-definition.

The three-dimensional resolution target comprises incisions and/or projections on a surface. The incisions and/or projections have three-dimensional geometric shapes that protrude from said surface and/or are embedded in said surface. Said incisions and/or projections can have clear and/or smoothed edges. Several incisions and/or projections are arranged in groups of two or more units. The incisions and/or projections of a group are spaced apart by a mutual distance that is preferably constant between multiple incisions and/or projections of the same group. Each group is repeated at least once on the surface of the target, maintaining constant the ratios between the dimensions of said incisions and/or projections and between said dimensions and said mutual distances and reducing said dimensions. The dimensions are varied between a first and a second group but not within a same group. The dimensions and said mutual distances for the incisions and/or projections are known.

In several preferred embodiments of the invention, the target has at least two incisions and/or projections directed according to two or more orientations with respect to the plane of said surface.

The system of the present invention is employed for the visual examination characterization and exploits said three-dimensional target. In its basic form, the system comprises an image acquisition unit (camera, video camera and the like) and at least a memory into which the acquired images are sent and preserved.

The advantages offered by the present invention are evident in light of the description set forth up to now and will be even clearer due to the enclosed figures and to the relative detailed description.

### Description of the figures

The invention will now be described hereinbelow in at least a preferred embodiment as a non-limiting example with the aid of the enclosed figures, in which:
- FIGURE 1 shows an axonometric view of a target 10 according to the present invention;
- FIGURE 2 shows a schematic view of a projection 3 of a target 10 according to the present invention;
- FIGURE 3 shows a schematic view of an incision 3 of a target 10 according to the present invention;
- FIGURE 4 shows an axonometric view of a target 10 according to the present invention;
- FIGURE 5 shows an axonometric view of a target 10 according to the present invention;
- FIGURE 6 shows a front view of a target 10 and several relative size ratios between incisions and/or projections 3 according to the present invention;
- FIGURE 7 shows a view of two targets 10 positioned on a surface of an element to be examined according to the present invention;
- FIGURE 8 shows a general view of a system 100 with a target 10 according to the present invention.

### Detailed description of the invention

The invention describes a target and a relative system for determining the resolution of acquired images for the visual examination of structural elements, mechanical elements and the like. The main advantages of the invention regard the possibility to objectively evaluate the minimum indications detectable on the surface, object under examination, by means of the direct comparison with a three-dimensional target in which the analogous indications are simulated, measured (of established and known dimensions) and exposed to the same lighting condition as the surface itself.

The target of the present invention is to easily construct, use, transport and distribute. It can be fabricated on multiple support types (PLA, ABS, PC, metals etc.) and is easy to attain. Additionally it can be attained with any color and finish in order to simulate the object under examination.

The target allows verifying the sensitivity of an image to detect small details on an object or a component. Its use is necessary if one carries out an indirect visual examination for the characterization of the image produced by means of image acquisition unit, such as high-definition 2D or 3D cameras and 3D scanning or optical instruments in general.

The system which employs the target of the present invention resolves further problems regarding an automation of the positioning of the target in specific points of the surface to be analyzed, such as the lighting of the surface itself. In addition, the system employs the target in order to resolve problems tied to the training of image recognition algorithms (also artificial intelligence algorithms).

The advantages just described above will be even clearer in light of the following descriptions. The present invention will now be illustrated as a merely non-limiting or non-binding example, with reference to the figures which illustrate several embodiments relative to the present inventive concept.

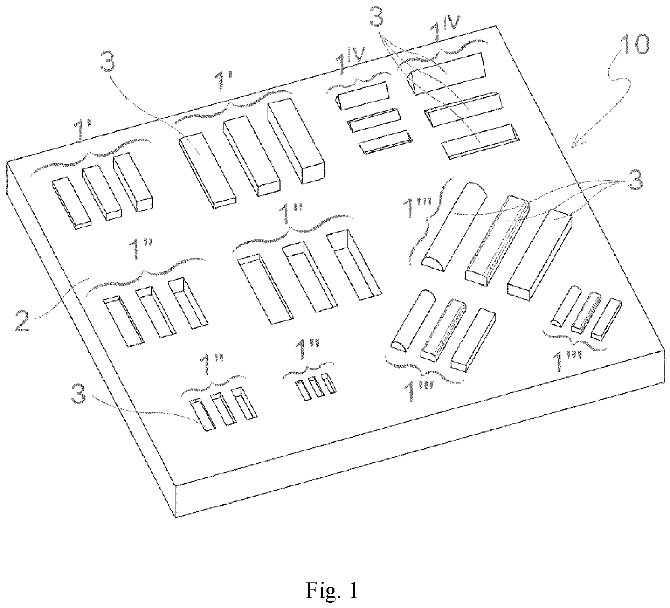

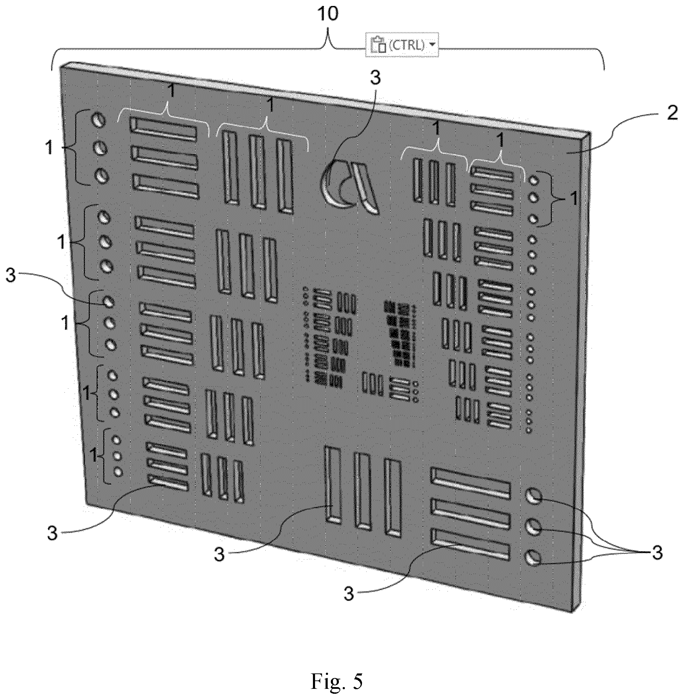

With reference to FIGS. 1, 4 and 5, axonometric views are shown of various targets 10 according to the present invention.

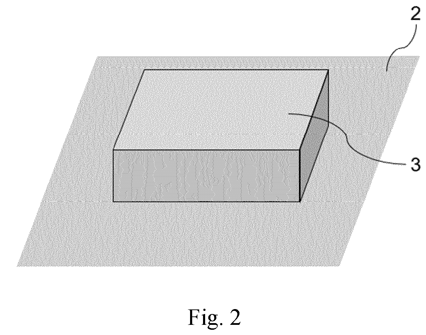

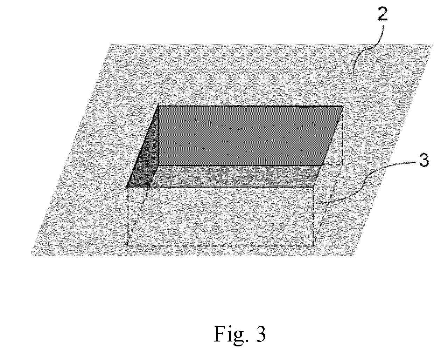

The three-dimensional resolution target 10 of the present invention comprises incisions and/or projections 3 placed on a surface 2 of said target 10. Said incisions and/or projections 3 have three-dimensional geometric shapes that protrude from said surface 2 and/or are embedded in said surface 2. Said incisions and/or projections 3 have clear and/or smoothed edges. A projection 3 is specifically shown in FIG. 2 while an incision 3 is specifically shown in FIG. 3. Specifically, in various embodiments of the present invention, said incisions and/or projections 3 are three-dimensional geometric figures obtained from the extrusion of various geometries (triangular, circular, octagonal), of letters, numbers, and/or other demarcation marks coplanar with said surface 2.

At least two or more incisions and/or projections 3 are arranged in groups 1. The incisions and/or projections 3 of a group 1 are spaced apart by a mutual distance which is preferably constant within the group 1. Each group 1 is repeated (where by "repeated" it is intended the fact that, on the surface 2, one finds a group 1 with the same number, the same shapes and the same orientations of incisions and/or projections 3) at least once on said surface 2, maintaining constant the ratios between the dimensions of said incisions and/or projections 3 and between said dimensions and said mutual distances and reducing said dimensions. This means that, with the reduction of the dimensions of the incisions and/or projections 3 (between one group 1 and another, and not within the same group 1), and maintaining said ratios constant, a second group 1 (which is the repetition of a first group 1) is designed starting from a first group 1, taking the dimensions thereof and the mutual distances and multiplying all by a same scale factor. Where said scale factor is preferably the same employed for successive repetitions of said first group 1 and/or for repetitions of other groups of other incisions and/or projections 3 on the same surface 2.

The dimensions and said mutual distances of said incisions and/or projections 3 are known. Where by "known dimensions" it is intended the fact that the incisions and/or projections 3 have a depth (either projecting or incised in the surface 2) that is suitable designed and defined. In addition, by "known dimensions" it is also intended that all the characteristics of the geometric shapes of the incisions and/or projections 3 are well-known, measured and measurable, such as for example the possible chamfer angle between the faces of the incisions and/or projections 3. By "known mutual distances", it is intended that the distance between the incisions and/or projections 3 of the same group 1 is suitably designed, defined, measured and measurable.

In several preferred embodiments of the present invention, said target 10 has at least two incisions and/or projections 3 directed according to two or more orientations with respect to the plane of said surface 2. Where by "being directed according to two or more orientations" it is intended the fact that whatever the first direction in which the incisions and/or projections 3 are oriented on the surface 2, there is at least another incision and/or projection 3 which is oriented according to a direction different from the first direction but lying in the same plane as said surface 2. By "being oriented according to one direction" it is intended the fact that a with a local coordinate system for incision and/or projection 3 defined, the incision and/or projection 3 has one of the axes of said local coordinate system oriented according to (i.e. parallel to) said direction which lies in the plane of said surface 2. The considerations just made regarding the orientation of the incisions and/or projections 3 are not to be considered valid for incisions and/or projections 3 with central symmetry such as circles, since the orientation of the circle on the plane where they lie does not produce differences.

Specifically, FIG. 1 shows a target 10 with four groups 1 (groups of three incisions and/or projections 3) of incisions and/or projections 3. Specifically the first group 1' is characterized by projections 3 with height (with respect to the surface 2) that is increasing from left to right in FIG. 1 and is repeated once on the surface 2. The second group 1" is characterized by incisions with depth (with respect to the surface 2) that is increasing from left to right in FIG. 1 and is repeated three times on the surface 2. The third group 1‴ has a 45° orientation and is characterized by projections 3 all having the same height (with respect to the surface 2) but characterized by edges with corners increasingly smoothed starting from the lowest one (with sharp edges) up to the highest one in FIG. 1 with a section that changes from rectangular becomes completely semi-circular. Said third group 1‴ is repeated twice on the surface 2 shown in FIG. 1. The fourth group 1^{IV} finally has an orientation a 90° and has at the top two projections 3 with parallelepiped figure with triangular section of different height, and has at the bottom an incision 3 which has parallelepiped figure with triangular section. Said fourth group 1^{IV} is repeated once on the surface 2 in FIG. 1.

In a preferred embodiment of the present invention, like that shown in FIGS. 2-6, the incisions and/or projections 3 have sharp edges (the faces of the incisions and/or projections are not connected by chamfer angles) and have projection thickness equal to the smaller dimension between the two dimensions of the face of the incision and/or projection 3 coplanar with the surface 2. In this preferred embodiment of said target 10, the incisions and/or projections 3 are oriented according to two mutually orthogonal directions on the surface 2. In this preferred embodiment of the present invention, several incisions and/or projections 3 are three-dimensional geometric figures of parallelepiped with square section type and other incisions and/or projections 3 are cylindrical with circular faces, where one of said faces is coplanar with said surface 2.

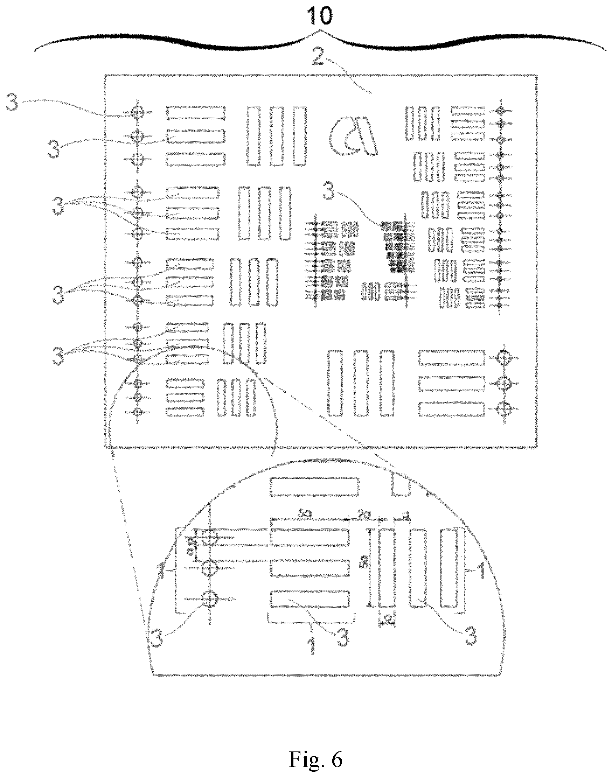

Specifically in FIG. 6 as in the following description, the embodiment of the present invention is illustrated which is deemed to be the best embodiment at present.

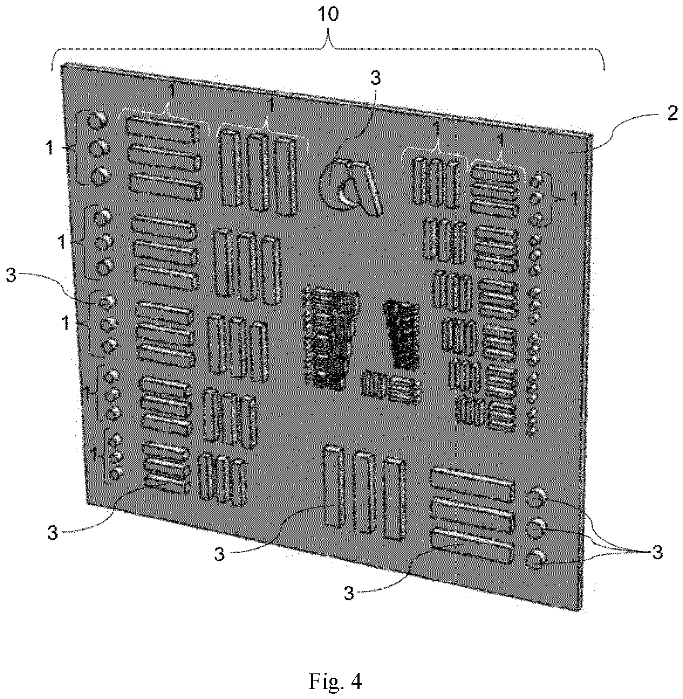

The targets 10 pursuant to FIGS. 4-7 were designed starting from the target recommended by UNI EN 13927 regulations, where, starting from the drawing USAF1951, a surface 2 was attained with a series of three-dimensional bars (incisions and/or projections 3) with the same dimensions (on the plane of the surface 2) of the target USAF.

The target 10 of FIG. 6 is shown to have groups 1 (of projections 3) having a smaller size on the plane of the surface 2 equal to a value "a", a greater size on the plane (plane of the surface 2) equal to a value "5a" and a thickness (height from the surface 2) equal to "a". It is also observed, in FIG. 6, that the distance between two adjacent groups 1 is equal to "2a". Each group 1 has a different value of "a" but the ratios between dimensions and mutual distances remain those described and illustrated in FIG. 6.

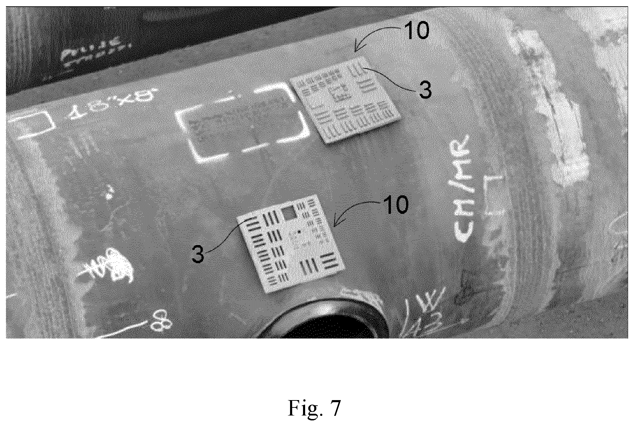

The targets 10 of the present invention can be made of metal (as shown in FIG. 7), PVC, etc., with the further advantage of being able to flank, with further targets 10 in 3D with different color and/or finish or, directly, with that most adapted to the type of surface that one wishes to examine and to the environment where it is situated (polished metal, oxidated metal, painted metal, wood, plastic or composite materials, ceramic materials, etc.). The effectiveness of the filming or of the image captured with the unit 101 will be evaluated with the reading of the target 10 positioned in proximity of the surface of the element to be examined.

FIGS. 4-6 show targets 10 according to the present invention comprising three groups 1 of incisions and/or projections 3 which are repeated twenty-four times. Specifically a first group 1 in which said incisions and/or projections 3 are three cylinders with circular section, a second group 1 in which said incisions and/or projections 3 are three parallelepipeds oriented horizontally in the figures, and a third group 1 in which said incisions and/or projections 3 are three parallelepipeds oriented vertically in the figures. Each of said first, second and third group 1 is repeated in the targets 10 of FIGS. 4-6, twenty-four times in which, with each repetition, a constant scale factor is assigned as previously described.

In the case of a visual examination, it will be up to the examiner technician, as a function of the minimum detail what one wishes to identify and of the examination procedure, to determine on the scales of the target 10 what must be the minimum detail to be identified in the three dimensions (two dimensions on the plane of the surface 2 and one exiting from the surface) so to be able to affirm that the image meets the requested minimum quality.

In the event in which the minimum depth or relief to be identified is set and known, it is possible to make the target 10 with all the incisions 3 (or projections 3) with a same depth (or height from the surface 2) so as to evaluate as variable only the width of the incisions and/or projections 3. In this case, multiple targets 10 must be made with incisions and/or projections 3 of different depth/height centered on that minimum.

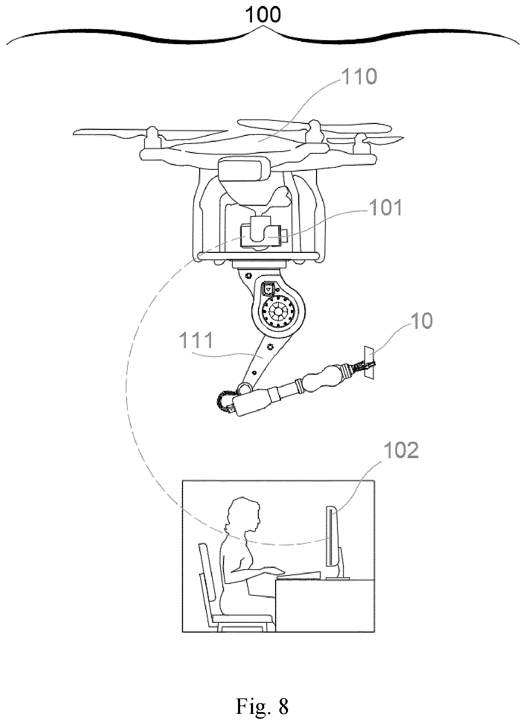

The present invention is also relative to a visual examination characterization system 100, suitable for exploiting a target 10 as described, and comprising at least an image acquisition unit 101 and at least a memory into which the acquired images are sent and preserved. a general view of the system 100 is reported in FIG. 8. Where said image acquisition unit 101 is, in various embodiments of the present invention, a camera or a video camera and/or other similar device. The memory can be a hard disk unit installed on the unit 101 or even remotely, to which the unit 101 sends the images by means of wired connections or wireless communication technologies, such as communication technology by means of Internet, Wi-Fi, Bluetooth and/or another way.

In several embodiments of the present invention such as that shown in FIG. 8, said unit 101 is placed on a remote-guided moving device 110 (which in FIG. 8 is a quadcopter drone). Said unit 101 continuously sends said acquired images to a remote-control apparatus 102 (which in FIG. 8 is a computer supervised by an expert user who executes a visual diagnosis by means of said images). The images are sent by means of wireless communication technologies, such as communication technology by means of Internet, Wi-Fi, Bluetooth and/or another way.

In several embodiments of the present invention, the moving device 110 is a radio-controlled means for the inspection of ducts and pipes, in other embodiments this is a drone for the inspection of high mechanical components and structures, in other embodiments it is a robot (tracked or rubber-coated etc.) for the inspection of structures that are dangerous for man.

In several embodiments of the present invention like that shown in FIG. 8, said moving device 110 comprises a remotely controlled mechanical arm 111. Said mechanical arm 111 is used to fix said target 10 to the element, where by element it is intended the structure, the structural element, the mechanical element, the hydraulic element, electrical element and/or another type of element, being visually examined by means of said unit 101. Said target 10 comprises one or more hooks and/or an adhesive portion and/or a magnetic part and/or a battery powering an electromagnet and/or a battery powering a suction apparatus to be fixed to said element. Where by suction apparatus it is intended an apparatus such to have an external casing from which a mouth suctions air, generating a vacuum when the external casing is placed in contact with said element that is under examination.

Said target 10 then comprises coupling means which can be exploited in order to be able to fix it to said element under examination.

In various embodiments of the present invention, said target 10 has a surface 2 and incisions and/or projections 3 with various colors in order to be able to better simulate the surface conditions of the element to be inspected. In several cases, a target 10 with a color contrast that is too strong between surface 2 and incisions and/or projections 3 with respect to the colors present on the element to be analyzed can in fact lead to having a perception of the video definition of the unit 101 that is falsely increased.

In several embodiments of the present invention, said moving device 110 further comprises one or more lighting sources that are turned on, off and/or directed remotely. In this manner, in conditions of poor visibility, it is possible to turn on one or more lighting sources and thus light both the element to be examined, and said target 10, and it is also possible to move said lighting source in order to be able to have an improved perception of the depth due to the cast shadows.

In several embodiments of the present invention, the system 100 further comprises image recognition algorithms trained to recognize the shadows cast by said incisions and/or projections 3 of said target 10 by lights which illuminate said target 10 with various types of brightness intensity and above all from various angles. A refined training of said algorithms, according to the present invention, is operated by having the algorithms analyze - and aiding the learning thereof through manual input - a great number of images/films of the target 10 exposed to different conditions and lighting directions. Ideally, the algorithms are trained based on videos of a target 10 in which a lighting source is moved along the points of an ideal hemisphere having center in the geometric center of the target 10 and radius defined by a user. Said algorithms carry out a recognition of the shadows cast by imperfections and/or surface damages of an element that is under examination in order to evaluate the depth and/or the relief of said imperfections and/or surface damages with respect to the surface of said element under examination. Said image recognition algorithms, in several embodiments are artificial intelligence algorithms whose training is considerably facilitated by the presence of the target 10 and by videos which can be made on the target 10 in order to provide very accurate size references IA under various lighting conditions, for their training in the recognition of the images and in the study of the cast shadows.

In several embodiments of the present invention, said image recognition algorithms are adapted to automatically mark the smallest incisions and/or projections 3 on the target 10 clearly recognizable from the acquired images by the unit 101; said image recognition algorithms signal the smallest geometric dimensions of said incisions and/or projections 3 recognized. The function of the recognition algorithms is, by way of a non-limiting or non-binding example, the following: in a teaching/training step, the algorithms are provided with at least a "master image" of the target 10 in which all the groups 1 and the relative incisions and/or projections 3 are perfectly distinguishable from each other; when later, in an element examination step, the recognition algorithms frame said target 10, these are adapted to recognize several or all of the incisions and/or projections 3 thereof and to compare them with those acquired by the "master image"; when, in this comparison step, the algorithms detect discrepancies between incisions and/or projections 3 acquired from the instantaneous images and those acquired from the "master image" (such as for example a group 1 of three incisions and/or projections 3 close by is detected as a single large incision and/or projection 3, being unable to clearly detect the spaces between the single incisions and/or projections 3), these proceed to signal the groups 1 and incisions and/or projections 3 that produced said discrepancy, and which therefore are not clearly distinguishable. Since during the training of the algorithms each incision and/or projection 3 is associated with the relative geometric dimensions, the algorithms are also capable of presenting users with the geometric dimensions of the smallest groups 1 and/or incisions and/or projections 3 clearly recognized on the target 10 filed at that instant of time by the unit 101.

In several embodiments of the present invention, the system 100 further comprises a rotating support comprising a flat surface on which said target 10 is placed. The target 10 is placed on the surface through suitable recesses present on said surface and/or through said hooks and/or adhesive portion and/or magnetic part and/or electromagnet and/or suction apparatus. Said rotating support is capable of rotating said surface by an angle comprised between 0° and 360° around an axis perpendicular to said surface and/or capable of rotating, with angles preferably comprised between 0° and 180°, around axes lying on planes parallel to said surface. The rotation of the rotating support can be manually operated by a technician or it can be remotely operated, said rotating support having, in several embodiments of the invention, radio-controlled electric motors that trigger said rotations.

Finally, it is clear that modifications, additions or variations can be made to the invention described up to now that are obvious for a man skilled in the art, without departing from the protective scope that is provided by the enclosed claims.

## Claims

1. Three-dimensional resolution target (10), **characterized in that** it comprises incisions and/or projections (3) placed on a surface (2) of said target (10); said incisions and/or projections (3) having three-dimensional geometric shapes that protrude from said surface (2) and/or are embedded in said surface (2); said incisions and/or projections (3) having sharp and/or rounded edges; at least two or more incisions and/or projections (3) being arranged in groups (1); said incisions and/or projections (3) of a group (1) being spaced apart by a reciprocal distance; each group (1) being repeated at least once on said surface (2) maintaining constant the ratios between the dimensions of said incisions and/or projections (3) and between said dimensions and said reciprocal distances and reducing said dimensions; said incisions and/or projections (3) having known dimensions and mutual distances.

2. Three-dimensional resolution target (10), according to the previous claim 2, wherein said incisions and/or projections (3) are directed according to two or more orientations with respect to the plane of said surface (2).

3. Visual examination characterization system (100), suitable for exploiting a target (10), according to the previous claim 1 or 2, comprising at least one image acquisition unit (101) and at least one memory in which the acquired images are sent and stored.

4. System (100), according to the previous claim 3, **characterized in that** said unit (101) is placed on a remote-guided moving device (110); said unit (101) continuously sending said acquired images to a remote-control apparatus (102).

5. System (100), according to the preceding claim 4, **characterized in that** said moving device (110) comprises a remotely controlled mechanical arm (111); said mechanical arm (111) being used to fix said target (10) to the element being visually examined via said unit (101); said target (10) comprising one or more hooks and/or an adhesive portion and/or a magnetic part and/or a battery powering an electromagnet and/or a battery powering a suction apparatus to be fixed to said item.

6. System (100), according to any of the preceding claims 3-5, **characterized in that** said moving device (110) further comprises one or more lighting sources that are turned on, off and/or directed remotely.

7. System (100), according to any of the preceding claims 3-6, **characterized in that** it further comprises image recognition algorithms; said algorithms being trained to recognize the shadows cast by said incisions and/or projections (3) of said target (10); said algorithms performing a recognition of the shadows cast by imperfections and/or surface damages of an element being examined to evaluate the depth and/or relief of said imperfections and/or surface damages with respect to the surface of said element being examined.

8. System (100), according to the previous claim 7, **characterized in that** said image recognition algorithms can automatically signal the smallest incisions and/or projections (3) on the target (10) clearly recognizable from the images acquired by the unit (101); said image algorithms signaling the geometric dimensions of said smallest incisions and/or projections (3) recognized.

9. System (100), according to any of the preceding claims, **characterized in that** it further comprises a rotating support comprising a flat surface on which said target (10) is placed; said rotating support capable of rotating said surface by an angle between 0° and 360° around an axis perpendicular to said surface and/or capable of rotating around axes lying on planes parallel to said surface.
